Europäisches Patentamt

European Patent Office

Office européen des brevets

(19)

(11) Veröffentlichungsnummer: **0 109 450**
**B1**

(12) **EUROPÄISCHE PATENTSCHRIFT**

(45) Veröffentlichungstag der Patentschrift:
**04.06.86**

(51) Int. Cl.⁴: **A 01 B 33/12**

(21) Anmeldenummer: **82109817.5**

(22) Anmeldetag: **23.10.82**

(54) Kreiselegge.

(43) Veröffentlichungstag der Anmeldung:
**30.05.84 Patentblatt 84/22**

(45) Bekanntmachung des Hinweises auf die Patenterteilung:
**04.06.86 Patentblatt 86/23**

(84) Benannte Vertragsstaaten:
**AT BE CH DE FR GB IT LI NL**

(56) Entgegenhaltungen:
**DE - A - 2 531 911**
**DE - U - 8 136 196**
**FR - A - 2 222 929**
**FR - A - 2 447 134**

(73) Patentinhaber: **Rabewerk Heinrich Clausing, D-4515 Bad Essen 1 (DE)**

(72) Erfinder: **Warnking, Richard, Klockenpatt 5, D-4515 Bad Essen 1 (DE)**

(74) Vertreter: **Patentanwälte Dipl.-Ing. R. Schlee Dipl.-Ing. A. Missling, Bismarckstrasse 43, D-6300 Giessen (DE)**

ACTORUM AG

**Beschreibung**

Die Erfindung bezieht sich auf eine Kreiselegge mit mehreren in einer quer zur Fahrtrichtung verlaufenden Reihe angeordneten Werkzeugkreiseln, die in einem Maschinengestell gelagerte Wellen aufweisen, an denen sich Arbeitswerkzeuge in Form von Messern oder Zinken tragende Werkzeugträger befinden, wobei die Umfangsfläche der Werkzeugträger über mindestens einen Teil ihrer Höhe als Rotationsfläche ausgebildet ist und unterhalb des Maschinengestells ein Schutzkasten angeordnet ist, der in einer unteren ebenen Wand zu den genannten Rotationsflächen konzentrische kreisbogenförmige Öffnungen aufweist, deren Ränder die Rotationsflächen mit geringem Abstand umgeben.

Die Werkzeugträger und Wellen einer Kreiselegge sind wegen des Zwangsantriebes der Kreisel dadurch gefährdet, dass feste Stücke, insbesondere Steine, zwischen die Werkzeugträger und das Gestell der Maschine und zwischen benachbarte Werkzeugträger eingeklemmt werden. Das Einklemmen von Steinen und dergleichen kann leicht zu einer Beschädigung der Werkzeugträger, der Zinkenbefestigung und des Gestells führen, das meist als Getriebekasten ausgebildet ist. Hierbai kann es auch vorkommen, dass Kreiselwellen und/oder deren Lagerung beschädigt werden. Man hat deshalb Schutzvorrichtungen für die Werkzeugträger geschaffen, die das Eindringen von festen Stücken zwischen Gestell und Werkzeugträger verhindern sollen.

Im folgenden werden die Arbeitswerkzeuge Zinken genannt. Die Erfindung bezieht sich jedoch auch auf Kreiseleggen mit anderen Bodenbearbeitungswerkzeugen, z.B. mit messerartigen Werkzeugen.

Bei einer bekannten Kreiselegge der eingangs genannten Art (DE-A-2 531 911) besteht der Schutzkasten aus einer Wanne mit Randflanschen. Die Randflansche sind mit dem zugleich als Getriebekasten ausgebildeten Maschinengestell verschraubt. Für die Verschraubung werden Schrauben ausgenutzt, mit denen zugleich der Deckel des Getriebekastens befestigt ist. Eine Demontage des Schutzkastens ist mit grossem Arbeitsaufwand verbunden, da viele Schrauben zu lösen sind. Für die Auswechslung einzelner Zinken kann dieser Arbeitsaufwand nicht in Kauf genommen werden, washalb die Zinkenbefestigung so beschaffen ist, dass die Zinken von unten her gelöst und befestigt werden können, was jedoch mit dem Nachteil verbunden ist, dass die Zinken-Befestigungsstellen der Gefahr von Beschädigungen ausgesetzt sind.

Die DE-U-8 136 196 zeigt eine Kreiselegge mit einer Schutzeinrichtung, die eine vordere vertikale Wand und eine daran anschliessende horizontale Wand aufweist, in der sich kreisbogenförmige Ausschnitte befinden. Die kreisbogenförmigen Ausschnitte sind konzentrisch zu als Kreisscheiben ausgebildeten Werkzeugträgern, wobei zwischen den Ausschnitten und den Werkzeugträgern nur ein relativ schmaler Spalt besteht. Diese bekannte Kreiselegge hat den Vorteil, dass bei guter Abdeckung des Raumes oberhalb der Werkzeugträger dieser Raum ohne vorherige Montagearbeiten zugänglich ist. Allerdings ist der genannte Raum hinten stets offen, so dass die Gefahr besteht, dass in diesem Raum störende Fremdkörper, insbesondere Steine, gelangen. Demgegenüber bringt ein kompletter Schutzkasten, wie er aus der bereits genannten DE-A-2 531 911 bekannt ist, einen praktisch absoluten Schutz gegen das Eindringen von störenden Fremdkörpern.

Die Aufgabe wird nach der Erfindung dadurch gelöst, dass der Schutzkasten aus einem, bezüglich der Fahrtrichtung der Kreiselegge, vorderen Schutzkastenteil und einem hinteren Schutzkastenteil besteht und mindestens einer dieser Schutzkastenteile als Wartungsklappe ausgebildet ist und vom Maschinengestell leicht lösbar und/oder bei bestehender Verbindung mit dem Maschinengestell in eine als Wartungslage bezeichnete Lage bewegbar ist, bei der die Oberseiten der Werkzeugträger zugänglich sind.

Wenn aus irgendwelchen Gründen ein Zugang zur Oberseite der Werkzeugträger erforderlich ist, genügt es, die Wartungsklappe zu entfernen, zu verschwenken oder zu verschieben, was mit einem Handgriff oder wenigen Handgriffen bewerkstelligt werden kann.

Man kann deshalb insbesondere auch eine Zinkenbefestigung wählen, bei der zum Auswechseln von Zinken ein Zugang zur Oberseite der Werkzeugträger erforderlich ist. Insbesondere also können Zinken befestigt werden, die mittels durch den Werkzeugträger hindurchgesteckter Schrauben mit diesem verbunden sind. Hierbei wird ein vollständiger Schutz der Werkzeugträger und der Wellenteile, die aus dem Gestell (Getriebekasten) herausragen, erreicht.

Das Entfernen ist besonders leicht möglich, wenn gemäss Anspruch 2 die Wartungsklappe vor der vertikalen Ebene endet, die durch die Achsen der Werkzeugträger definiert ist. In diesem Fall nämlich ist ein seitliches Herausziehen oder Herausschwenken der Wartungsklappe möglich, ohne dass zuvor eine Vertikalverschiebung der Wartungsklappe stattgefunden hat. Man kann selbstverständlich auch gemäss Anspruch 3 beide Schutzkastenteile vor der genannten Ebene enden lassen; diese Ausführungsform wird bevorzugt.

Im Prinzip kann die Wartungsklappe sowohl an der Vorderseite als auch an der Hinterseite des Gerätes angeordnet sein. Auch ist es möglich, beide Schutzkastenteile als Wartungsklappen auszubilden. Vorzuziehen jedoch ist die Ausführungsform gemäss Anspruch 4, gemäss dem nur der hintere Schutzkastenteil als Wartungsklappe ausgebildet ist. Bei einer solchen Ausführungsform nämlich kann der hauptsächlich beanspruchte vordere Schutzkastenteil ohne Nachteile für die Wartung sehr stabil und damit auch schwer ausgebildet werden und auch so fest mit dem Maschinengestell verbunden werden, dass eine Entfernung nur mit grösserem Arbeitsaufwand möglich ist.

Vorteilhaft ist es, die Wartungsklappe in Abschnitte zu unterteilen (Anspruch 5). Dies erleichtert die Handhabung, da die Abschnitte relativ leicht sind und sich demgemäss auch leicht entfernen und wieder anbringen lassen. Es braucht jeweils nur die Wartungsklappe entfernt oder verlagert zu werden, die im Bereich eines beschädigten oder betriebsgestörten Werkzeugkreisels liegt. Wenn man, wie dies vorgezogen wird, die Wartungsklappe hinten an der Maschine anordnet, kann man dafür eine kleinere Wanddicke vorsehen als für den vorderen Schutzkastenteil. Die Beanspruchung des hinteren Schutzkastenteiles ist ja wesentlich geringer als die Beanspruchung des vorderen Schutzkastenteiles. Man kann auch die untere waagerechte Wand der Wartungsklappe höher legen als die untere waagerechte Wand des anderen Schutzkastenteiles. Dies hat den Vorteil, dass die untere Wand der Wartungsklappe im Schutz des vorderen Schutzkastenteiles liegt. Dies trägt weiter dazu bei, die Wartungsklappe aus relativ dünnem Blech herstellen zu können, wodurch das Gewicht gering gehalten und die Bedienung erleichtert wird.

In den Ansprüchen 8 bis 11 sind verschiedenen Ausführungsformen für eine wegnehmbare Wartungsklappe angegeben. Die Befestigung der Wartungsklappe gemäss Anspruch 10 hat den Vorteil, dass die Wartungsklappe an der Maschine aufgehangen werden kann, bevor die Steckbolzen eingesteckt werden. Dies erleichtert insbesondere dann die Arbeit, wenn eine einzelne Person Wartungs- und/oder Reparaturarbeiten ausführt. Die Montage ist auch sehr einfach bei der Ausführungsform gemäss Anspruch 11, da auch hier die Wartungsklappe über die Zapfen gehangen werden kann, bevor Arretierungsstifte eingesteckt werden.

In den Ansprüchen 12 bis 15 sind Ausführungsformen mit schwenkbar aufgehängter Wartungsklappe angegeben. Eine Arretierungseinrichtung für die Öffnungsstellung (Anspruch 14) hat den Vorteil, dass ein behelfsmässiges und damit eventuell nicht genügend sicheres Arretieren der Öffnungsstellung nicht nötig ist.

Steckbolzen sind gemäss Anspruch 16 vorteilhafterweise durch an sich bekannte Schnellverschlüsse, z.B. Klappstecker, gesichert (Anspruch 16).

Die erfindungsgemässe Kreiselegge hat vorzugsweise Zinken, die mittels durch den Werkzeugträger durchgesteckter Schrauben befestigt sind. Solche Zinken lassen sich leicht auswechseln, da die Durchsteckschrauben von der Oberseite der Werkzeugträger her zugänglich sind.

In der Zeichnung sind Ausführungsbeispiele der Erfindung dargestellt. Es zeigen:

Fig. 1 eine Rückansicht einer Kreiselegge,

Fig. 2 einen Schnitt nach Linie II-II in Fig. 1,

Fig. 3 eine teilweise Unteransicht der Kreiselegge in Richtung des Pfeiles III in Fig. 1,

Fig. 4 einen der Fig. 2 entsprechenden Schnitt bei einer zweiten Ausführungsform der Erfindung,

Fig. 5 eine teilweise Rückansicht entsprechend dem Pfeil V in Fig. 4,

Fig. 6 einen Querschnitt entsprechend Fig. 2 bei einer dritten Ausführungsform der Erfindung,

Fig. 7 eine teilweise Rückansicht entsprechend dem Pfeil VII in Fig. 6,

Fig. 8 einen den Fig. 2, 4 und 6 entsprechenden Schnitt bei einer vierten Ausführungsform der Erfindung mit schwenkbarer Wartungsklappe,

Fig. 9 eine Ansicht einer Kreiselegge samt Werkzeugträger und daran befestigten Zinken, wobei die Zinken anders ausgebildet sind als bei den anderen Ausführungsformen,

Fig. 10 einen Querschnitt entsprechend den Fig. 2, 4, 6 und 8 bei einer fünften Ausführungsform der Erfindung, und

Fig. 11 eine teilweise Rückansicht entsprechend dem Pfeil XI in Fig. 10.

Die Kreiselegge hat ein Gestell 1 in Form eines Getriebekastens in dem sechs Kreisel 2a bis 2f drehbar gelagert sind. Jeder Kreisel hat eine Welle 3, die innerhalb des Getriebekastens 1 gelagert ist und durch den horizontalen Boden 4 des Getriebekastens herausragt. Mit jeder Kreiselwelle 3 ist ein Stirnzahnrad 5 fest verbunden. Die Stirnzahnräder benachbarter Kreisel sind miteinander in Eigriff, so dass eine Kupplung aller Kreisel untereinander gegeben ist und benachbarte Kreisel jeweils entgegengesetzt rotieren.

Auf dem Deckel 1b des Getriebekastens 1 sitzt ein Winkelgetriebe 6, aus dem bezüglich der durch den Pfeil F symbolisierten Fahrtrichtung nach vorne ein Wellenstummel herausragt, an den eine Gelenkwelle anschliessbar ist, die zur Zapfwelle eines Schleppers führt. Das Winkelgetriebe ist mit der Welle des Kreisels 2c verbunden, von der aus dann alle anderen Werkzeugkreisel angetrieben werden.

An der Vorderseite des Getriebekastens 1 befinden sich Zapfen 8 für den Anschluss von Unterlenkern eines Schlepper-Dreipunktgestänges. Diese Zapfen befinden sich an Platten 10, die am Getriebekasten 1a angeschweisst sind. Auf dem Maschinengestell ist ein insgesamt mit 12 bezeichneter Turm angeordnet, an dem der Oberlenker eines Schlepper-Dreipunktgestänges befestigbar ist.

An jedem Werkzeugkreisel befindet sich ein Werkzeugträger 17, der drehbar mit der Kreiselwelle 3 verbunden ist. Die Werkzeugträger 17 haben eine scheibenförmige Gestalt mit einer zylindrischen Aussenfläche 17a. Die Rotationsfläche ist also bei der gezeichneten Ausführungsform eine Zylinderfläche. Der Durchmesser D der Werkzeugträger 17 ist nur wenig kleiner als der Teilungsabstand t zwischen benachbarten Kreiseln. Es besteht also ein schmaler Spalt S ander Stelle, an der sich benachbarte Werkzeugträger am nächsten kommen. Eine zweckmässige Breite für diesen Spalt ist z.B. 10 mm.

Bei der gezeichneten Ausführungsform sind an jedem Werkzeugträger 17 zwei Zinken 18, 19 befestigt. Für die Zinken sind insgesamt drei verschiedene Ausführungsformen dargestellt.

Unterhalb des Getriebekastens ist ein insgesamt mit 20 bezeichneter Schutzkasten angeordnet. Der Schutzkasten 20 besteht aus einem vorderen Schutzkastenteil 20a und einem hinteren Schutzkastenteil 20b. Der Schutzkastenteil 20a ist als leicht abnehmbare Wartungsklappe ausgebildet.

Der vordere Schutzkastenteil 20a ist kräftiger ausgebildet als die Wartungsklappe 20b. Der vordere Schutzkastenteil 20a hat eine vertikale Wand 21, an die eine horizontale Wand 22 anschliesst. Das obere Ende der vertikalen Wand 21 überragt noch etwas die untere Vorderkante 23 des Getriebekasten-Unterteiles 1a. Die horizontale Wand 22 hat bogenförmige Aussparungen 24 (siehe dazu insbesondere Fig. 3), die konzentrisch zu den Achsen 3a der Kreiselwellen mit kleinem Abstand 25 verlaufen.

Zur Befestigung des vorderen Schutzkastenteiles 20a am Getriebekasten 1 sind an der vertikalen Wand 21 Aufhängelaschen 26 befestigt, die mittels Bolzen 27, 28 mit Lappen verbunden sind, die an der Vorderwand 1c des Getriebekastens angeschweisst sind. Für zwei Aufhängelaschen werden die ohnehin vorhandenen Lappen für die Verbindung mit dem Dreipunktgestänge eines Schleppers ausgenutzt. Zwischen diesen Lappen und den äusseren Enden der Kreiselegge sind weitere Lappen vorgesehen.

Der bis jetzt beschriebene vordere Schutzkastenteil ist bereits in der europäischen Patentschrift 81 600 beschrieben. Neu gegenüber der dort beschriebenen Kreiselegge ist hauptsächlich die Anordnung der Wartungsklappe 20b, mit deren Hilfe der vordere Schutzkastenteil zu einem kompletten Schutzkasten vervollständigt wird, ohne dass die Zugänglichkeit zu den Oberseiten der Werkzeugträger nennenswert behindert ist.

Der Schutzkastenteil 20b (im folgenden als Wartungsklappe bezeichnet) hat eine Grundform, die der Grundform des vorderen Schutzkastenteiles 20a ähnlich ist. Auch die Wartungsklappe 20b hat eine vertikale Wand 29 und eine rechtwinklig daran anschliessende horizontale Wand 30. Die obere Kante 29a beginnt kurz unterhalb des Bodens 4 des Getriebekastens 1. Die horizontale Wand 30 hat ebenfalls kreisbogenförmige Aussparungen 31, die konzentrisch zu den Kreiselwellen 3a sind. Der Abstand a zwischen den Werkzeugträgern 17 und der Wand der Aussparung 31 ist vorzugsweise gleich wie der entsprechende Abstand gegenüber den Ausnehmungen 24 am Schutzkastenteil 20a. Der bogenförmige Spalt zwischen Werkzeugträger 17 und zugeordneter bogenförmiger Ausnehmung 31 ist mit 32 bezeichnet.

Sowohl die horizontale Wand 22 als auch die horizontale Wand 30 enden vor der vertikalen Ebene 40, die durch die Achsen 3a der Werkzeugkreisel definiert ist.

Die Wartungsklappe 20b ist bei dem gezeichneten Ausführungsbeispiel in zwei Abschnitte A und B unterteilt. Jeder der Abschnitte ist leicht abnehmbar mit dem Getriebekasten verbunden. Zu diesem Zweck sind an der vertikalen Wand 29 jedes Abschnittes Lappen 33, 34 angeschweisst. Jeder Lappen ist mittels zweier Steckbolzen 35 mit einem Lappen 36 verbunden. Die Steckbolzen liegen vertikal übereinander. Die Steckbolzen sind zweckmässig mit Schnellverbindungen gesichert, die in der Zeichnung nicht dargestellt sind. Verwendet werden können hierfür z.B. Klappstecker, wie sie an einem Schlepperdreipunktgestänge am Oberlenkerstock und an den Unterlenkerzapfen verwendet werden.

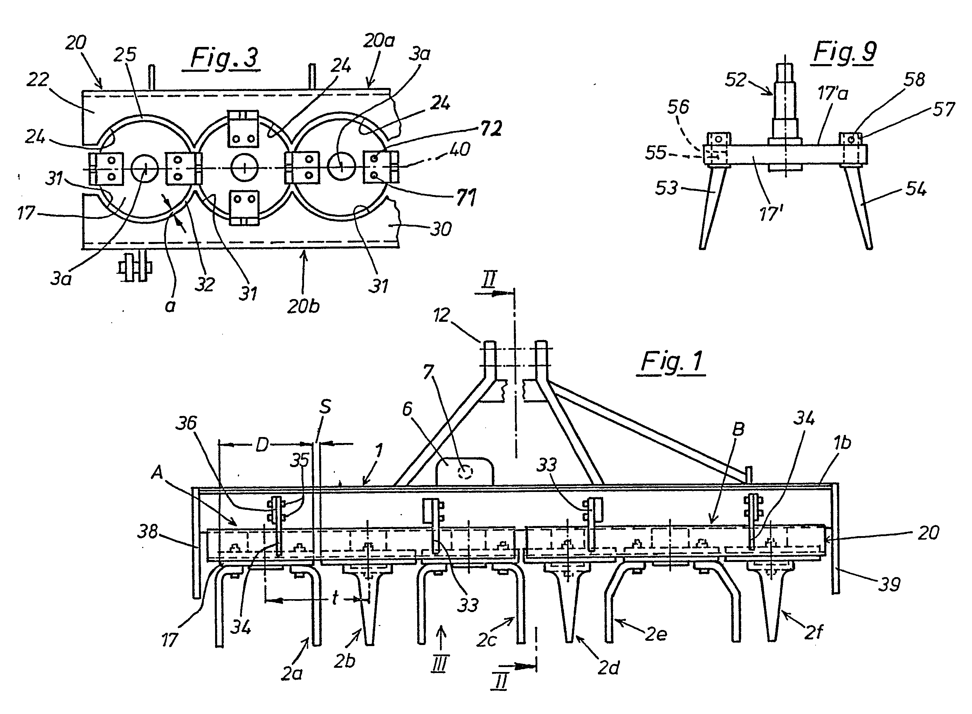

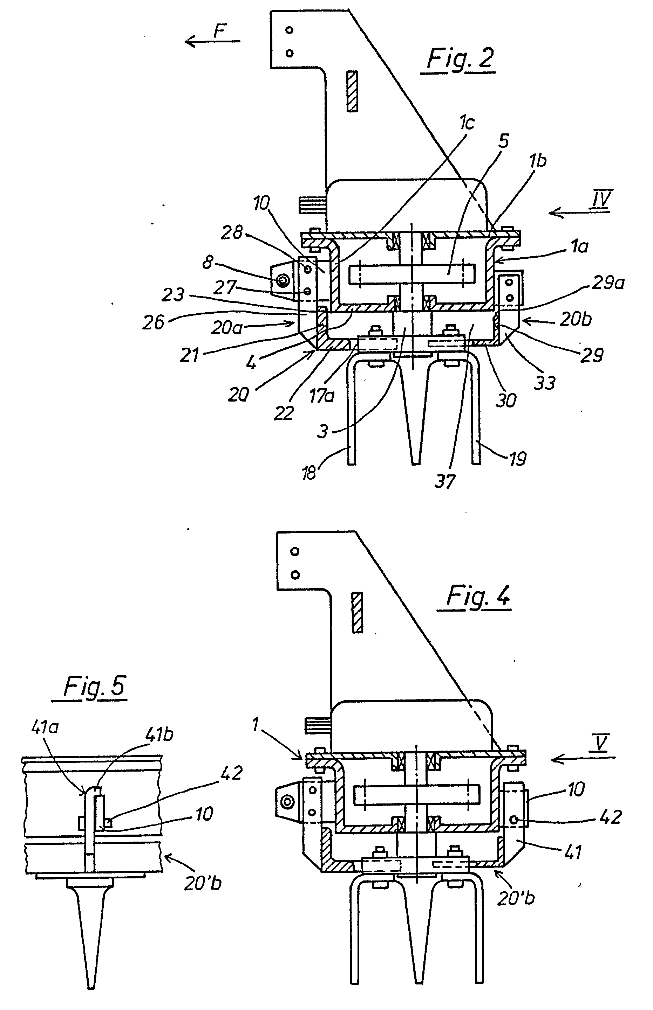

Bei der Arbeit mit der Kreiselegge ist diese an einen Schlepper angebaut, der das Gerät in Richtung des Pfeiles F (Fig. 2) mitnimmt. Die Zinken greifen in das zu bearbeitende Erdreich ein, wobei jedoch die Eindringtiefe nur so gross ist, dass der obere Bereich der Zinken 18, 19 oberhalb der zu bearbeitenden Bodenfläche liegt. Durch den Schutzkasten 20 wird verhindert, dass feste Gegenstände, insbesondere Steine, in den Raum 37 gelangen, der sich zwischen dem Schutzkasten und der unteren Wand 4 des Getriebekastens 1 befindet. Dieser Raum wird nach der Seite hin durch Platten 38, 39 (siehe Fig. 1) abgeschlossen. Die Schutzwirkung wird tatsächlich durch den vorderen Schutzkastenteil 20a bewirkt, da dieser Teil Gegenstände beiseite schiebt, die bei der Fahrt angetroffen werden. Jedoch könnten auch im Bereich der Wartungsklappe feste Gegenstände von unten in den Raum 37 gelangen, wenn die Wartungsklappe nicht als weiterer Abschluss vorhanden wäre.

Wenn nun z.B. am Kreisel 2b ein Zinken ausgewechselt werden soll, wird der Teil A der Wartungsklappe abgenommen. Zu diesem Zweck werden die Steckbolzen 35 herausgenommen, wonach die Wartungsklappe beiseite gelegt werden kann. Da die horizontale Wand 30 nicht bis zu der Ebene 40 reicht, werden die Werkzeugträger nicht so umgriffen, dass ein seitliches Herausziehen nicht mehr möglich wäre, weshalb die Wartungsklappe bequem nach der Seite weggezogen werden kann. Die leichte Abnehmbarkeit der Wartungsklappe ist auch von Vorteil, wenn in den Raum 37 über die unvermeidbaren Spalte 25, 32 zwischen den Werkzeugträgern und dem Schutzkasten kleinere Steine oder Verunreinigungen in den Raum 37 gelangt sind. Solche Teile können dann leicht entfernt werden, wenn die Wartungsklappe abgenommen ist. Die Unterteilung der Wartungsklappe 20 in Abschnitte A und B hat den Vorteil, dass man leicht handhabbare Teile erhält und dass nicht die gesamte Wartungsklappe abgenommen werden muss, wenn nur im Bereich eines der Abschnitte eine Störung aufgetreten ist.

Die Zinken 18, 19 sind mit jeweils zwei Durchgangsschrauben 71, 72 mit den Werkzeugträgern verbunden. Diese Art der Befestigung ist besonders einfach und stabil, erfordert jedoch einen Zugang der Werkzeugträger von oben. Dieser Zugang ist dank der Anordnung einer Wartungsklappe leicht möglich.

Die Ausführungsform nach den Fig. 4 und 5 unterscheidet sich von der bereits beschriebenen Ausführungsform dadurch, dass die hier mit 20'b bezeichnete Wartungsklappe auf etwas andere Weise mit dem Getriebekasten 1 verbunden ist. Auch in diesem Fall sind am Getriebekasten Lappen 10 befestigt, an denen Lappen 41 anliegen, die mit der Wartungsklappe 20'b verschweisst sind. Die Lappen 41 haben an ihren oberen Enden Abwinklungen 41a, an die ein horizontaler Abschnitt 41b anschliesst. Bei der Montage einer Wartungsklappe kann man dann zunächst die horizontalen Teile 41b auf die Lappen 10 auflegen und dann erst jeweils einen Arretierungsstift 42 hindurchstecken. Dadurch wird die Montage wesentlich erleichtert.

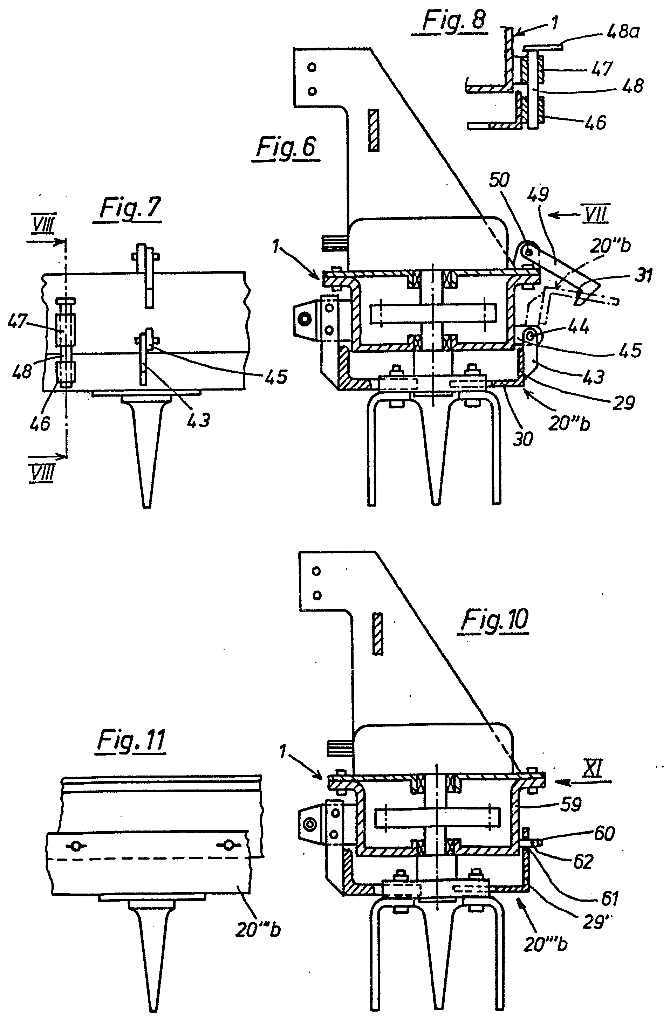

In den Fig. 6 bis 8 ist eine Kreiselegge mit einer Wartungsklappe 20''b dargestellt, die relativ zum Getriebekasten 1 verschwenkbar ist. Zu diesem Zweck sind an der vertikalen Wand 29 Aufhängelaschen 43 angeschweisst, die mittels Gelenkbolzen 44 mit Lappen 45 verbunden sind, die ihrerseits am Getriebekasten 1 angeschweisst sind.

In der Arbeitsstellung (in Fig. 6 mit ausgezogenen Linien gezeichnet) ist die Wartungsklappe mit einer Einrichtung entsprechend den Fig. 7 und 8 gesichert. Diese Einrichtung besteht aus einer an der Wartungsklappe befestigten Hülse 46 und einer am Getriebekasten 1 befestigten weiteren Hülse 47. In der Arbeitsstellung fluchten die Bohrungen dieser Hülsen miteinander und sind von einem Arretierungsstift 48 durchgriffen, der an seinem oberen Ende mit einem Handgriff 48a ausgerüstet ist. Aus der Betrachtung der Fig. 7 und 8 ist klar, dass bei eingestecktem Bolzen 48 eine unerwünschte Schwenkung um die Gelenkbolzen 44 nicht möglich ist, wodurch die Wartungsklappe 20''b sicher in ihrer Arbeitsstellung gehalten wird.

Wenn in die Öffnungsstellung übergegangen werden soll, werden die Arretierungsbolzen 48 herausgezogen, wonach sich die Wartungsklappe in die Stellung verschwenken lässt, die in Fig. 6 mit strichpunktierten Linien eingezeichnet ist. Die Stellung wird durch einen Haken 49 fixiert, der mittels eines Gelenkbolzens 50 am Maschinengestell gelagert ist. Hierbei umgreift der Haken die Kante 31 an der Wartungsklappe.

Bei der Ausführungsform nach den Fig. 10 und 11 ist die Wartungsklappe mit 20'''b bezeichnet. Bei dieser Wartungsklappe liegt die vertikale Wand 29' an der senkrechten Wand 59 des Getriebekastens 1 an. An dieser Wand sind Zapfen 60 angeschweisst, die Löcher 61 durchgreifen. Um ein Abrutschen der Wartungsklappe von den Zapfen 60 zu verhindern, haben diese einen Querstift 62. Beim Abnehmen der Wartungsklappe 20'''b sind nur die Querstifte 62 zu entfernen, wonach sich die Wartungsklappe in Fig. 10 gesehen nach rechts wegziehen lässt. Auch hier ist die Montage bequem (ähnlich wie bei der Ausführungsform nach den Fig. 4 und 5), da die Wartungsklappe abgehängt werden kann, bevor die Arretierungsstifte 62 eingesteckt werden.

Bei allen gezeichneten Ausführungsformen besteht die Wartungsklappe aus dünnerem Material als der vordere Schutzkastenteil. Dies ist deshalb möglich, weil die Wartungsklappe weniger kräftigen Stössen durch im Boden liegende Steine oder dergleichen ausgesetzt ist.

In Fig. 9 ist ein Werkzeugkreisel 52 dargestellt, der ebenfalls einen Werkzeugträger 17' in Form einer kreisförmigen Scheibe aufweist. Gegenüber den gezeigten Ausführungsformen, bei denen die Zinken aus Flachmaterial bestehen, sind die Zinken 53, 54 des Werkzeugkreisels 52 von kompakterem Querschnitt, beispielsweise kann dieser Querschnitt kreisrund sein. An den oberen Enden der Zinken befinden sich Zapfen 55, die durch Löcher 56 hindurchgesteckt sind. Die Zapfen ragen nach oben über den Werkzeugträger 17' vor. Das vorragende Ende ist mit Gewinde versehen, auf das eine Mutter 57 aufgeschraubt ist. Die Mutter ist durch einen Querstift 58 gesichert. Auch hier muss zum Auswechseln von Zinken die Oberseite 17a' des Werkzeugträgers zugänglich sein, um zunächst an defekten Zinken die Mutter 57 abschrauben zu können und am Ersatzzinken die Mutter 57 und den Sicherungsstift 58 montieren zu können.

**Patentansprüche**

1. Kreiselegge mit mehreren in einer quer zur Fahrtrichtung verlaufenden Reihe angeordneten Werkzeugkreiseln (2a bis 2f), die in einem Maschinengestell (1) gelagerte Wellen (3) aufweisen, an denen sich Arbeitswerkzeuge (18, 19) in Form von Messern oder Zinken tragende Werkzeugträger (17) befinden, wobei die Umfangsfläche (17a) der Werkzeugträger (17) über mindestens einen Teil ihrer Höhe als Rotationsfläche ausgebildet ist und unterhalb des Maschinengestells (1) ein Schutzkasten (20) angeordnet ist, der in einer unteren ebenen Wand (22, 30) zu den genannten Rotationsflächen (17a) konzentrische kreisbogenförmige Öffnungen (24, 31) aufweist, deren Ränder die Rotationsflächen (17a) mit geringem Abstand (a) umgeben, dadurch gekennzeichnet, dass der Schutzkasten (20) aus einem, bezüglich der Fahrtrichtung (F) der Kreiselegge, vorderen Schutzkastenteil (20a) und einem hinteren Schutzkastenteil (20b; 20'b; 20''b; 20'''b) besteht und mindestens einer (20b; 20'b; 20''b; 20'''b) dieser Schutzkastenteile (20a, 20b; 20'b; 20''b; 20'''b) als Wartungsklappe ausgebildet ist und vom Maschinengestell (1) leicht lösbar und/oder bei bestehender Verbindung mit dem Maschinengestell (1) in eine als Wartungslage bezeichnete Lage bewegbar ist, bei der die Oberseiten der Werkzeugträger (17; 17') zugänglich sind.

2. Kreiselegge nach Anspruch 1, dadurch gekennzeichnet, dass mindestens an der Wartungsklappe (20b; 20'b; 20''b, 20'''b) die untere ebene Wand (30) vor der gedachten Ebene (40) endet, in der die Achsen (3a) der Werkzeugkreisel (2a bis 2b; 52) liegen.

3. Kreiselegge nach einem der vorhergehenden Ansprüche, dadurch gekennzeichnet, dass bei beiden Schutzkastenteilen (20a, 20b; 20'b; 20''b; 20'''b) die untere ebene Wand (30) vor der gedachten Ebene (40) endet, in der die Achsen (3a) der Werkzeugkreisel liegen.

4. Kreiselegge nach einem der vorhergehenden Ansprüche, dadurch gekennzeichnet, dass nur der hintere Schutzkastenteil (20b; 20'b; 20''b; 20'''b) als Wartungsklappe ausgebildet ist und der vordere Schutzkastenteil (20a) weniger leicht vom Gestell (1) lösbar ist als die hinten angeordnete Wartungsklappe (20b; 20'b; 20''b) 20'''b).

5. Kreiselegge nach einem der vorhergehenden Ansprüche, dadurch gekennzeichnet, dass die Wartungsklappe (20b) in längs dem Maschinengestell aneinander anschliessende Abschnitte (A, B) unterteilt ist, die unabhängig voneinander vom Maschinengestell (1) abnehmbar bzw. bei bestehender Verbindung mit dem Maschinengestell in die Wartungslage bewegbar sind.

6. Kreiselegge nach einem der Ansprüche 4 und 5, dadurch gekennzeichnet, dass die Wartungsklappe (20b; 20'b; 20''b; 20'''b) kleinere Wanddicken aufweist als der vordere Schutzkastenteil (20a).

7. Kreiselegge nach einem der vorhergehenden Ansprüche, dadurch gekennzeichnet, dass die untere waagerechte Wand (30) der Wartungsklappe (20b; 20'b; 20''b; 20'''b) höher liegt als die untere waagerechte Wand (22) des anderen Schutzkastenteiles (20a).

8. Kreiselegge nach einem der vorhergehenden Ansprüche, dadurch gekennzeichnet, dass die Wartungsklappe (20b; 20'b) mittels Steckbolzen (35; 42) am Maschinengestell (1) befestigt ist.

9. Kreiselegge nach Anspruch 8, dadurch gekennzeichnet, dass am Maschinengestell (1) und an der Wartungsklappe (20b) Haltelappen (33, 34, 36) angeordnet sind, wobei zwei zusammenwirkende Haltelappen (35/36) von mindestens zwei Steckbolzen (35) durchgriffen sind, die vorzugsweise in einer vertikalen Ebene liegen (Fig. 1 bis 3).

10. Kreiselegge nach Anspruch 8, dadurch gekennzeichnet, dass am Maschinengestell (1) und an der Wartungsklappe (20'b) miteinandere zusammenwirkende Haltelappen (41, 10) angeordnet sind, wobei die an der Wartungsklappe (20'b) befestigten Haltelappen (41) an ihren oberen Enden (41b) abgebogen und über die am Maschinengestell angeordneten Lappen (10) gehängt sind und zwei zusammenhängende Haltelappen (10/41) von einem Steckbolzen (42) durchgriffen sind (Fig. 4, 5).

11. Kreiselegge nach einem der Ansprüche 1 bis 7, dadurch gekennzeichnet, dass am Maschinengestell Zapfen (60) befestigt sind, die Löcher (61) in einer nach oben ragenden Wand (29') der Wartungsklappe (20'''b) durchgreifen und dass die Wartungsklappe (20'''b) durch die Zapfen durchgreifende Arretierungsstifte (62) gegen Abrutschen von den Zapfen gesichert sind (Fig. 10, 11).

12. Kreiselegge nach einem der Ansprüche 1 bis 7, dadurch gekennzeichnet, dass die Wartungsklappe (20'''b) auch in der Wartungsstellung am Maschinengestell (1) befestigt ist.

13. Wartungsklappe nach Anspruch 12, dadurch gekennzeichnet, dass an der Wartungsklappe (20'''b) und am Maschinengestell (1) miteinander zusammenwirkende, von Gelenkbolzen (44) durchgriffene Lappen (43, 45) angeordnet sind.

14. Kreiselegge nach einem der Ansprüche 12 und 13, dadurch gekennzeichnet, dass am Maschinengestell (1) mindestens eine Arretierungseinrichtung (49), z.B. ein schwenkbarer Haken, angeordnet ist, mit dem die Wartungsklappe (20'b) in der Wartungsstellung (Öffnungsstellung) arretierbar ist.

15. Wartungsklappe nach einem der Ansprüche 13 und 14, dadurch gekennzeichnet, dass zur Fixierung der Schliessstellung der Wartungsklappe (20''b) an dieser und am Maschinengestell (1) Hülsen (47, 48) angeordnet sind, deren Bohrungen in der Schliessstellung miteinander fluchten und von einem herausziehbaren Bolzen (48) durchgriffen sind.

16. Kreiselegge nach einem der vorhergehenden Ansprüche, dadurch gekennzeichnet, dass die Steckbolzen mit Schnellverschlüssen, z.B. Klappsteckern oder Federsteckern, versehen sind.

17. Kreiselegge nach einem der vorhergehenden Ansprüche, dadurch gekennzeichnet, dass die Zinken (18, 19; 53, 54) mittels durch den Werkzeugträger (17) hindurchgesteckter Schrauben (71, 72) bzw. mittels durch die Werkzeugträger (17') hindurchgesteckter, an den Enden der Zinken (53, 54) befindlicher Zapfen (55) an den Werkzeugträgern (17') befestigt sind (Fig. 9).

## Claims

1. A rotary harrow with a plurality of tool rotors (2a to 2f), which are disposed in a row tranversely to the direction of travel and which comprise shafts (3), which are mounted in a machine frame (1) and on which are disposed tool supports (17) supporting operating tools (18, 19) in the form of knives or prongs, the peripheral surface (17a) of the tool supports (17) being formed over at least part of its height as a rotational surface and there being disposed below the machine frame (1) a protective case (20), a level lower wall (22, 30) of which is provided with circular openings (24, 31) which are concentric to the said rotational surfaces (17a) and the edges of which surround the rotational surfaces (17a) at a slight distance (a), characterized in that the protective case (20) comprises a front protective case portion (20a) — as viewed in the direction of travel (F) of the rotary harrow — and a rear protective case portion (20b; 20'b; 20''b; 20'''b), and at least one (20b; 20'b; 20''b; 20'''b) of the said protective case portions (20a, 20b; 20'b; 20''b; 20'''b) is formed as a maintenance flap and can be easily detached from the machine frame (1) and/or — when there is a connexion to the machine frame (1) — can be moved into a position designated as a maintenance position in which the tops of the tool supports (17; 17') are accessible.

2. A rotary harrow according to Claim 1, characterized in that at least on the maintenance flap (20b; 20'b; 20''b; 20'''b) the level lower wall (30) terminates before the notional plane (40) in which the axes (3a) of the tool rotors (2a to 2b; 52) are situated.

3. A rotary harrow according to one of the preceding Claims, characterized in that in both the protective case portions (20a, 20b; 20'b; 20''b; 20'''b) the level lower wall (30) terminates before the notional plane (40) in which the axes (3a) of the tool rotors are situated.

4. A rotary harrow according to any one of the preceding Claims, characterized in that only the rear protective case portion (20b; 20'b; 20''b; 20'''b) is formed as a maintenance flap and the front protective case portion (20a) is detachable less easily from the frame (1) than the maintenance flap (20b; 20'b; 20''b; 20'''b) disposed at the rear.

5. A rotary harrow according to any one of the preceding Claims, characterized in that the maintenance flap (20b) is divided into portions (A, B) which adjoin one another along the machine frame and which can be removed from the machine frame (1) independently of one another and/or — when there is a connexion to the machine frame — can be moved into the maintenance position.

6. A rotary harrow according to one of the Claims 4 and 5, characterized in that the maintenance flap (20b; 20'b; 20''b; 20'''b) has smaller wall thicknesses than the front protective case portion (20a).

7. A rotary harrow according to any one of the preceding Claims, characterized in that the lower horizontal wall (30) of the maintenance flap (20b; 20'b; 20''b; 20'''b) is situated at a higher level than the lower horizontal wall (22) of the other protective case portion (20a).

8. A rotary harrow according to any one of the preceding Claims, characterized in that the maintenance flap (20b; 20'b) is secured to the machine frame (1) by means of cotter pins (35; 42).

9. A rotary harrow according to Claim 8, characterized in that holding lugs (33, 34, 36) are provided on the machine frame (1) and on the maintenance flap (20b), two cooperating holding lugs (35/36) being engaged by at least two cotter pins (35) which preferably lie on one vertical plane (Figs. 1 to 3).

10. A rotary harrow according to Claim 8, characterized in that holding lugs (41, 10) are provided on the machine frame (1) and on the maintenance flap (20'b), the holding lugs (41) secured to the maintenance flap (20'b) being bent at their upper ends (41b) and suspended by way of the lugs (10) disposed on the machine frame and two connected holding lugs (10/41) being engaged by a cotter pin (42) (Figs. 4 and 5).

11. A rotary harrow according to any one of the Claims 1 to 7, characterized in that studs (60), which pass through holes (61) in a upwardly extending wall (29') of the maintenance flap (20'''b), are secured to the machine frame, and the maintenance flap (20'''b) is prevented from slipping off the studs by locking pins (62) passing through the studs (Figs. 10 and 11).

12. A rotary harrow according to any one of Claims 1 to 7, characterized in that the maintenance flap (20''b) is also secured to the machine frame (1) in the maintenance position.

13. A rotary harrow according to Claim 12, characterized in that lugs (43, 45), which cooperate with one another and are and traversed by pivot pins (44), are disposed on the maintenance flap (20'''b) and also the machine frame (1).

14. A rotary harrow according to one of Claims 12 and 13, characterized in that at least one locking device (49), for example a pivotable hook, by which the maintenance flap (20''b) can be locked in the maintenance portion (opening position), is disposed on the machine frame (1).

15. A rotary harrow according to one of Claims 13 and 14, characterized in that, in order to set the closed position of the maintenance flap (20''b), the maintenance flap (20''b) and the machine frame (1) are provided with sleeves (47, 48), the bores of which are aligned with one another in the closed position and are traversed by a retractable pin (48).

16. A rotary harrow according to one of the preceding Claims, characterized in that the cotter pins are provided with snap closures, for example flap connectors or spring connectors.

17. A rotary harrow according to any one of the preceding Claims, characterized in that the prongs (18, 19; 53, 54) are secured to the tool supports (17') by means of screws (71, 72) inserted through the tool supports (17) or by means of studs (55) inserted through the tool supports (17') and disposed at the ends of the prongs (53, 54).

## Revendications

1. Herse rotative munie de plusieurs rotors à outils (2a à 2f) disposés en une rangée dirigée transversalement à la direction d'avancement, lesquels comportent des arbres (3) montés dans un bâti, sur lesquels se trouvent des porte-outils (17) portant des outils de travail (18, 19) en forme de lames ou de dents, et dont la surface périphérique (17a) des porte-outils (17) constitue sur au moins une partie de sa hauteur une surface de révolution et un caisson de protection (20) étant disposé en dessous du bâti (1) et présentant, dans une paroi plane inférieure (22, 30), des ouvertures en arc de cercle (24, 31) concentriques auxdites surfaces de révolution (17a) et dont les bords entourent les surfaces de révolution (17a) avec un petit espacement (a), caractérisée en ce que le caisson de protection (20) est formé d'une partie antérieure (20a), en considérant le sens d'avancement (F) de la herse rotative, et d'une partie postérieure (20b; 20'b; 20''b; 20'''b) et en ce qu'au moins une (20b; 20'b; 20''b; 20'''b) de ces parties du caisson de protection est conçue sous forme de volet d'entretien et peut être facilement détachée du bâti (1) et/ou peut, lorsqu'il existe une liaison fixe avec le bâti (1), être amenée à une position appelée position d'entretien, dans laquelle les côtés supérieurs de porte-outils (17; 17') sont accessibles.

2. Herse rotative selon la revendication 1, caractérisée en ce qu'au moins sur le volet d'entretien (20b; 20'b; 20''b; 20'''b), la paroi plane inférieure (30) se termine avant le plan imaginaire (40) dans lequel sont situés les axes (3a) des rotors d'outils 2a à 2b; 52).

3. Herse rotative selon l'une des revendications précédentes, caractérisée en ce que, sur les deux parties du caisson de protection (20a, 20b; 20'b; 20''b; 20'''b), la paroi plane inférieure (30) se termine avant le plan imaginaire (40) dans lequel sont situés les axes des rotors d'outil.

4. Herse rotative selon l'une des revendications précédentes, caractérisée en ce que seule la partie postérieure (20b; 20'b; 20''b; 20'''b) du caisson de protection est conçue sous forme de volet d'entretien et en ce que la partie antérieure du caisson de protection (20a) est moins facilement détachable du bâti (1) que le volet d'entretien (20b; 20'b; 20''b; 20'''b) disposé derrière.

5. Herse rotative selon l'une des revendications précédentes, caractérisée en ce que le volet d'entretien (20b) est subdivisé en tronçons (A, B) se raccordant l'un à l'autre le long du bâti, qui peuvent être retirés du bâti (1) indépendamment l'un de l'autre ou qui, lorsqu'il existe une liaison fixe avec le bâti, peuvent être amenés séparément à la position d'entretien.

6. Herse rotative selon l'une des revendications 4 et 5, caractérisée par le fait que le volet d'entretien (20b; 20'b; 20''b; 20'''b) présente de moindres épaisseurs de paroi que la partie antérieure du caisson de protection (20a).

7. Herse rotative selon l'une des revendications précédentes, caractérisée en ce que la paroi horizontale inférieure (30) du volet d'entretien (20b; 20'b; 20''b; 20'''b) est placée plus haut que la paroi horizontale inférieure (22) de l'autre partie du caisson de protection (20a).

8. Herse rotative selon l'une des revendications précédentes, caractérisée en ce que le volet d'entretien (20b; 20'b) est fixé au bâti (1) au moyen de broches amovibles (35; 42).

9. Herse rotative selon la revendication 8, caractérisée en ce que sur le bâti (1) et sur le volet d'entretien (20b) sont disposés des fers de soutien (33, 34, 36), deux fers de soutien coopérants (35/36) étant traversés par au moins deux broches amovibles (35) qui sont de préférence situées dans un plan vertical (figures 1 à 3).

10. Herse rotative selon la revendication 8, caractérisée en ce que sur le bâti (1) et sur le volet d'entretien (20'b) sont disposés des fers de soutien (41, 10) coopérant entre eux, les fers de soutien (41) fixés au volet d'entretien (20'b) étant coudés à leur extrémité supérieure (41b) et accrochés sur les fers (10) disposés sur le bâti et deux fers de retenue associés reliés entre eux (10/41) étant traversés par une broche amovible (42) (figures 4, 5).

11. Herse rotative selon l'une des revendications 1 à 7, caractérisée en ce qu'au bâti sont fixés des tenons (60) qui traversent des trous (61) d'une paroi (29) du volet d'entretien (20'''b) qui est dirigée vers le haut, et en ce que le volet d'entretien (20'''b) est maintenu, pour ne pas glisser des tenons, par des goupilles d'arrêt (62) traversant les tenons (figures 10, 11).

12. Herse rotative selon l'une des revendications 1 à 7, caractérisée en ce que le volet d'entretien (20''b) est fixée au bâti (1) même dans la position d'entretien.

13. Herse rotative selon la revendication 12, caractérisée en ce que sur le volet d'entretien (20'''b) et sur le bâti (1) sont disposés des fers (43, 45) traversés par des tourillons d'articulation (44).

14. Herse rotative selon l'une des revendications 12 et 13, caractérisée en ce que sur le bâti (1) est disposé au moins un dispositif d'arrêt (49), par exemple un crochet pivotant, avec lequel on peut arrêter le volet d'entretien (20''b) dans la position d'entretien (position d'ouverture).

15. Herse rotative selon l'une des revendications 13 et 14, caractérisée en ce que pour la fixation en la position de fermeture du volet d'entretien (20''b), sur celui-ci et sur le bâti (1) sont disposées des douilles (47, 48) dont les perforations sont alignées entre elles dans la position de fermeture et sont traversées par une broche (48) amovible.

16. Herse rotative selon l'une des revendications précédentes, caractérisée en ce que les broches sont munies de moyens de verrouillage rapides, par exemple de goupilles pliantes ou des goupilles à ressort.

17. Herse rotative selon l'une des revendications précédentes, caractérisée en ce que les dents (18, 19; 53, 54) sont fixées aux porte-outils (17') au moyen de vis (71, 72) enfilées à travers le porte-outils (17) ou au moyen de tourillons (55) situés à l'extrémité de la dent (53, 54) et enfilés à travers les porte-outils (17').

0 109 450

_Fig. 3_

_Fig. 9_

_Fig. 1_

Fig. 2

Fig. 5

Fig. 4

*Fig. 8*

*Fig. 6*

*Fig. 7*

*Fig. 10*

*Fig. 11*